# EUROPÄISCHE PATENTSCHRIFT

(11) **EP 0 976 947 B1**
(45) Veröffentlichungstag und Bekanntmachung des Hinweises auf die Patenterteilung: **06.10.2004**
(21) Anmeldenummer: 99114306.6
(22) Anmeldetag: 21.07.1999
(51) Int. Cl.: F16F 9/05, F16F 9/084

(54) **Luftfederbein und Verfahren zur Herstellung eines Luftfederbeins**
Air spring strut and manufacturing thereof
Jambe de ressort pneumatique et sa procédure de fabrication

(30) Priorität: 29.07.1998 DE 19834092
(43) Veröffentlichungstag der Anmeldung: 02.02.2000
(73) Patentinhaber: Continental Aktiengesellschaft, 30165 Hannover (DE)
(72) Erfinder: Wode, Stefan, Dr., 30851 Langenhagen (DE)

(56) Entgegenhaltungen:
- DE-A- 4 428 601
- DE-C- 19 508 980
- DE-C- 19 522 459

## Beschreibung

Die Erfindung betrifft ein Luftfederbein, das folgende Bestandteile enthält:
- eine Luftfeder mit einem Rollbalg, die einen Federraum umschließt
- einen Abrollkolben, über den der Rollbalg abrollbar ist
- einen Federträger, der in den Abrollkolben eingetaucht ist, mit einem Absatz, auf den der Abrollkolben aufgesetzt ist,
- eine ringförmige Dichtung, die zwischen dem Federträger und dem Abrollkolben angeordnet ist und den Federraum gegenüber der Umgebung abdichtet.

Ein Luftfederbein der eingangs genannten Art ist beispielsweise aus der DE 44 28 601 A1 bekannt. Das Luftfederbein enthält eine Luftfeder mit einem Außenrohr, das zusammen mit einem Rollbalg und einem Abrollkolben einen Federraum umschließt. Der Abrollkolben der Luftfeder stützt sich auf einem Absatz eines Federträgers ab, der beispielsweise als ein Stoßdämpfer ausgebildet sein kann. Oberhalb des Absatzes des Federträgers ist in der Innenwand des Abrollkolbens eine Nut vorgesehen, in der eine ringförmige Dichtung eingelegt ist, die zwischen dem Federträger und dem Abrollkolben angeordnet ist und den von der Luftfeder umschlossenen Federraum gegenüber der Umgebung luftdicht abdichtet.

Der DE 44 28 601 A1 ist nicht zu entnehmen, wie die Abdichtung zwischen dem Federträger und dem Abrollkolben im einzelnen hergestellt wird. Es ist jedoch aus der DE 195 22 459 C1 der gleichen Anmelderin bekannt, die ringförmige Nut zwischen dem Federträger und dem Abrollkolben von außerhalb des Abrollkolbens zugänglich zu machen und von außen über eine Injektionsöffnung mit einer formbaren Dichtmasse aufzufüllen, die sich einerseits am Abrollkolben und andererseits am Federträger anlegt.

Das aus der DE 44 28 601 A1 und der DE 195 22 459 C1 bekannte Luftfederbein weist eine zuverlässige Abdichtung der Luftfeder zur Umgebung hin auf. Es ist jedoch festzustellen, daß das aus den genannten Druckschriften bekannte Luftfederbein erst komplett fertiggestellt werden muß und die Abdichtung zwischen dem Federträger und dem Abrollkolben erst danach erfolgen kann. Insofern ist das Herstellverfahren eines Luftfederbeins gemäß der DE 44 28 601 A1 bzw. gemäß der DE 195 22 459 C1 als aufwendig zu bezeichnen.

Aus der DE 195 08 980 C1 ist ein Luftfederbein mit einer Luftfeder bekannt, deren Abrollkolben sich auf einen Teleskopstoßdämpfer taumelbeweglich abstützt. Dazu ist auf das Außenrohr des Teleskopstoßdämpfers ein flanschartiger Kragen aufgesetzt, auf dem ein Ringteil aus Elastomermaterial angeordnet ist. Der dem Außenrohr des Teleskopstoßdämpfers zugewandte Endbereich des Abrollkolbens ist ebenfalls als flanschartiger Kragen ausgebildet und auf das elastomere Ringteil aufgesetzt. Die Kragen weisen bevorzugt die Form einer Kugelkalotte auf.

Durch die oben erläuterte Anbindung des Abrollkolben an dem Außenrohr des Teleskopstoßdämpfers ist eine Taumelbeweglichkeit des Abrollkolbens gewährleistet. Es ist jedoch festzustellen, daß zur Gewährleistung dieser Taumelbeweglichkeit der flanschartige Kragen einen erheblich größeren Durchmesser aufweisen muß als das Außenrohr des Teleskopstoßdämpfers. Um die axiale Stabilität des Außenrohres des Teleskopstoßdämpfers nicht zu sehr zu beeinträchtigen, wird der flanschartige Kragen daher als separates Bauteil ausgebildet. Dies erfordert eine separate Abdichtung des flanschartigen Kragens gegenüber der Umgebung. Darüber hinaus muß das Ringteil eine aufwendige Form aufweisen, um eine ausreichende Abdichtung zu den kugelkalottenförmigen Kragen zu gewährleisten. Es ist daher teuer in der Fertigung. Aus den genannten Gründen ist die aus der DE 195 08 980 C1 bekannte Anbindung der Luftfeder an einen Federträger nur bedingt geeignet.

Der Erfindung liegt die Aufgabe zugrunde, eine Anbindung einer Luftfeder an einen Federträger zu schaffen, die einfach herstellbar ist und die eine zuverlässige Abdichtung des von der Luftfeder umschlossenen Raums gegenüber der Umgebung gewährleistet.

Gemäß den kennzeichnenden Merkmalen des Anspruchs 1 wird die Aufgabe dadurch gelöst, daß
- auf dem Absatz des Federträgers ein O-Ring angeordnet ist, dessen Querschnittsflächendurchmesser so bemessen ist, daß er die Breite des Absatzes zumindest bedeckt und daß
- der dem Federträger zugewandte Endbereich des Abrollkolbens nach radial außen ausgestellt ist und daß
- der Federträger derart in den Abrollkolben eintaucht, daß der nach radial außen ausgestellte Endbereich des Abrollkolbens den Absatz des Federträgers umfaßt und der O-Ring zwischen der Außenwand des Federrohres und der Innenwand des Abrollkolbens radial verpreßt ist.

Bevorzugt ist der Querschnittsflächendurchmesser des O-Rings im unbelasteten Zustand des O-Rings größer als die Breite des Absatzes, um eine gute radiale Verpressung des O-Rings zu gewährleisten. Typischerweise weist die Querschnittsfläche des O-Rings (d.h. die Schnurstärke) einen Durchmesser von 2 mm bis 8 mm auf und die Breite des Absatzes beträgt ca. 60 % bis 80 % der gewählten Schnurstärke (bei einer Schnurstärke von 5 mm beträgt die Breite des Absatzes also 3 mm bis 4 mm, so daß der O-Ring um 1 mm bis 2 mm radial verpreßt wird.

Die Aufgabe wird ebenfalls durch den nebengeordneten Anspruch 7 gelöst.

Die mit der Erfindung erzielten Vorteile sind insbesondere darin zu sehen, daß die Anbindung des Abrollkolbens an dem Federträger auf einfache Art und Weise herstellbar ist, da dazu lediglich ein leicht zu fertigender und als Normteil erhältlicher O-Ring auf den Absatz des Federträgers aufgelegt zu werden braucht. Darüber hinaus ist durch die radiale Verpressung des O-Ringes zwischen der Außenwand des Federträgers und der Innenwand des Abrollkolbens ein luftdichtes Abschließen des von der Luftfeder umschlossenen Federraums gegenüber der Umgebung gewährleistet. Ein weiterer Vorteil der Erfindung ist darin zu sehen, daß sowohl die Außenwand des Federträgers im Bereich des Absatzes als auch der dem Federträger zugewandte Endbereich des Abrollkolbens gewisse Fertigungstoleranzen aufweisen kann, da diese durch die hohe radiale Verpressung des O-Ringes ausgeglichen werden und somit das luftdichte Abschließen des Federraumes gegenüber der Umgebung nicht beeinträchtigen. Somit ist eine preiswerte Fertigung sowohl des Federträgers als auch des Abrollkolbens möglich. Ein weiterer Vorteil der Erfindung ist darin zu sehen, daß der Absatz, auf dem der O-Ring angeordnet ist, nur eine geringe Breite aufzuweisen braucht. Aus diesem Grunde ist die axiale Stabilität des Federträgers durch den Absatz nur in zu vernachläßigendem Umfang beeinträchtigt. Ein weiterer Vorteil der Erfindung ist schließlich darin zu sehen, daß eine ausreichende axiale Abstützung des Abrollkolbens auf dem Absatz des Federträgers gewährleistet ist, obwohl zwischen dem Absatz des Federträgers und der Innenwand des Abrollkolbens der O-Ring angeordnet ist.

Gemäß einem Ausführungsbeispiel der Erfindung nach Anspruch 2 sind der Abrollkolben und der Federträger weitgehend rotationssymmetrisch zu ihrer Längsachse ausgebildet und der Innenwanddurchmesser des Endbereiches des Abrollkolbens entspricht weitgehend dem maximalen Außenwanddurchmesser des Absatzes des Federträgers. Der Vorteil dieses Ausführungsbeispiels ist darin zu sehen, daß bei einem rotationssymmetrischen Abrollkolben und Federträger der Endbereich bzw. der Absatz besonders einfach herzustellen sind.

Gemäß einer Weiterbildung der Erfindung nach Anspruch 3 weist der Federträger oberhalb des Absatzes einen Anschlag auf, auf den der O-Ring vor der Montage des Abrollkolbens auf dem Federträger aufgelegt wird. Der Vorteil dieser Weiterbildung ist darin zu sehen, daß bei der Montage des Abrollkolbens auf dem Federträger der O-Ring rollend von dem Anschlag zu dem Absatz überführt wird. Eine Bechädigung des O-Ringes durch Vorübergleiten des Abrollkolbens an dem O-Ring ist bei der Montage des Abrollkolbens auf dem Federträger daher ausgeschlossen.

Gemäß einer Weiterbildung der Erfindung nach Anspruch 4 ist der Abstand zwischen dem Anschlag und dem Absatz geringfügig kleiner als ein ganzzahliges Vielfaches des Umfanges der Querschnittsfläche des O-Ringes. Der Vorteil dieser Weiterbildung ist darin zu sehen, daß bei der Montage des Abrollkolbens auf dem Federträger der O-Ring während des Abrollens keine ganzzahlige Anzahl von Umdrehungen macht. Vielmehr kommt der O-Ring bereits kurz vor Vollendung einer letzten Umdrehung auf dem Absatz zu liegen. Da der O-Ring aufgrund innerer Spannungen dazu bestrebt ist, auch die letzte" Umdrehung zu vervollständigen, wird die radiale Pressung des O-Ringes auf dem Sitz unterstützt, und es kommt zu einer Art "Einrasten".

Gemäß einer Weiterbildung nach Anspruch 5 weist der Federträger unmittelbar oberhalb des Absatzes eine Taille auf, in der der O-Ring liegt. Der Vorteil dieser Weiterbildung ist darin zu sehen, daß sich der elastisch verformbare O-Ring in diese Taille unter einer radialen Verjüngung einlegt, was ebenfalls zu einer Unterstützung der radialen Verpressung des O-Ringes führt.

Gemäß einer Weiterbildung der Erfindung nach Anspruch 6 ist der Absatz in dem Federträger als Sicke ausgebildet. Der Vorteil dieser Weiterbildung ist darin zu sehen, daß eine derartige Sicke auf einfache Art und Weise durch radiales Ausstellen eines rohrförmigen Federträger von innen erfolgen kann.

Gemäß einer Weiterbildung der Erfindung nach Anspruch 7 weist das dem Federträger zugewandte Ende des Abrollrollkolbens einen Innenwanddurchmesser auf, der deutlich größer ist als der Außenwanddurchmesser des Absatzes, und der Innenwanddurchmesser des Endes verjüngt sich im Endbereich des Abrollkolbens auf den Außenwanddurchmesser des Absatzes. Der Vorteil dieser Weiterbildung ist darin zu sehen, daß eine derartige "tulpenartige"Ausbildung des Endbereiches eine Montage des Abrollkolbens auf dem Federträger vereinfacht.

Ein Ausführungsbeispiel und weitere Vorteile der Erfindung werden im Zusammenhang mit den nachstehenden Figuren erläutert, darin zeigt:
- Fig.1: ein Luftfederbein in schematischer Ansicht,
- Fig. 2: einen Ausschnitt aus Figur 1,
- Fig. 3: einen Ausschnitt aus Figur 1.

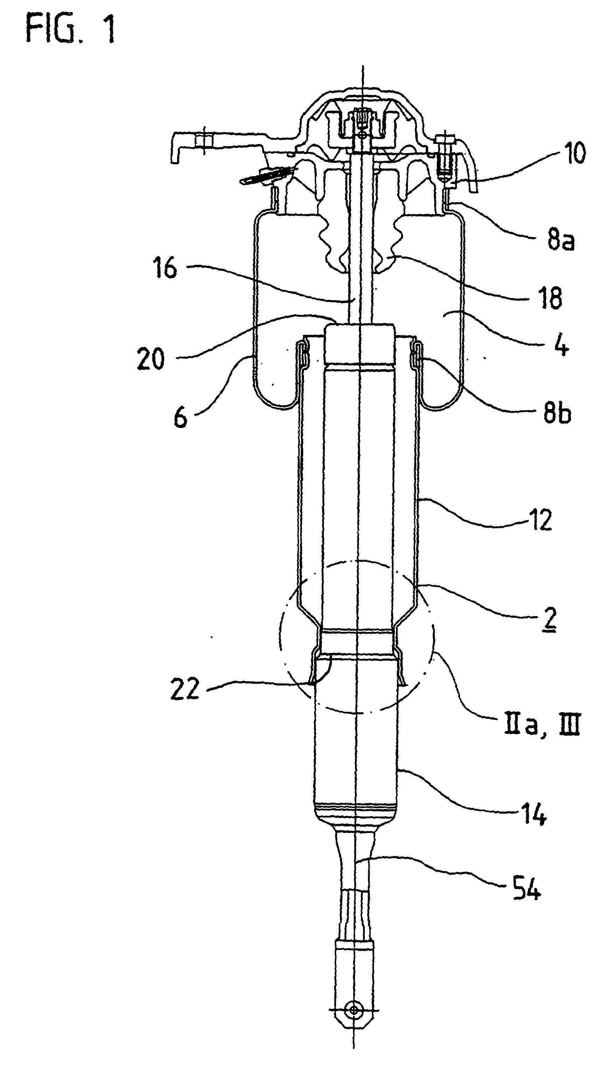

Figur 1 zeigt in schematischer Darstellung ein Luftfederbein 2, das einen an sich bekannten Aufbau aufweist. Das Luftfederbein 2 enthält eine Luftfeder mit einem Rollbalg 6, der mit Hilfe eines Befestigungselementes 8a am oberen Deckel 10 und mit Hilfe eines Befestigungselementes 8b an einem Abrollkolben 12 befestigt ist. Die Luftfeder umschließt einen Federraum 4, der über einen Druckanschluß mit Druckluft versorgbar ist. Der Abrollkolben 12 ist auf einem Federträger 14 aufgesetzt und stützt sich in axialer Richtung des Luftfederbeines 2 auf dem Absatz 22 ab. Dazu weist der Abrollkolben 12 unmittelbar oberhalb des Absatzes 22 weitgehend die gleiche Umfangskontor auf, wie der Federträger 14 oberhalb des Absatzes 22. Der Federträger 14 ist in dem gezeigten Ausführungsbeispiel als Behälterrohr ausgebildet, in dem in an sich bekannter Art und Weise ein Stoßdämpfer angeordnet ist. Der Stoßdämpfer verfügt über eine Kolbenstange 16, die mit dem oberen Deckel 10 der Luftfeder in mechanischer Wirkverbindung steht. Bei einer Hubbewegung des Luftfederbeins 2 wird die Kolbenstange 16 aus dem Stoßdämpfer herausgezogen bzw. taucht in diesen ein und dämpft dabei die in der Luftfeder entstehenden Schwingungen. Die Kolbenstange 16 ist an ihrem dem oberem Deckel 10 zugewandten Ende konzentrisch von einem Puffer 18 umgeben, der bei größeren Hubbewegungen des Luftfederbeins 2 auf der Endkappe 20 des Stoßdämpfers aufsetzt.

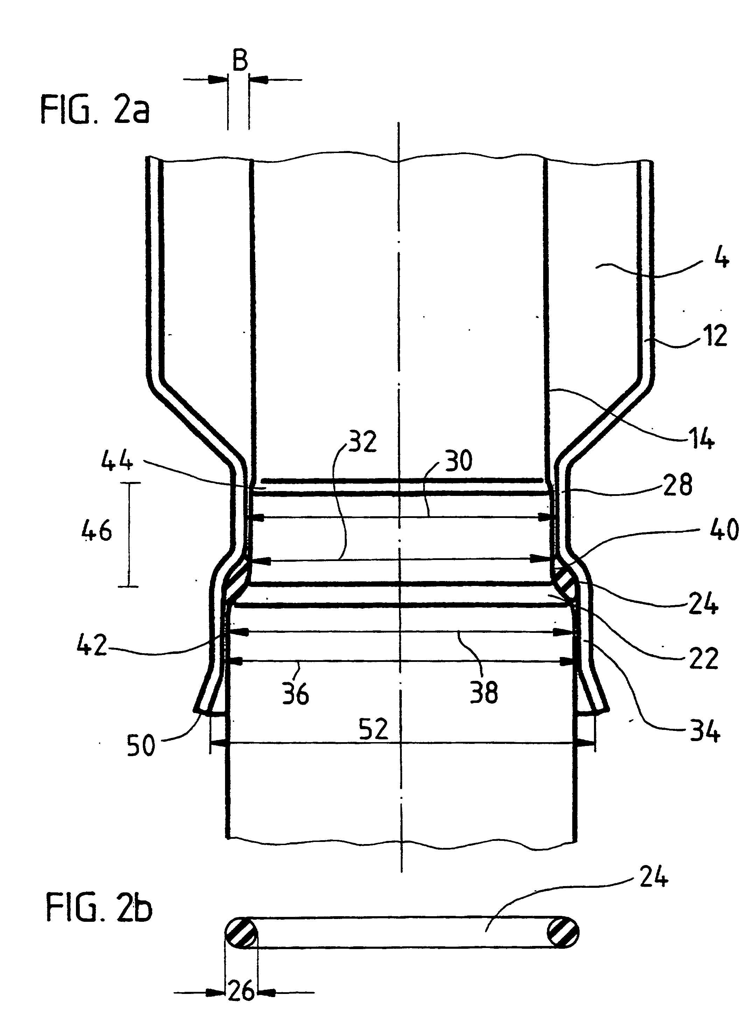

Vorzugsweise sind der Abrollkolben 12 und der Federträger 14 rotationssymmetrisch zur Längsachse 54 des Luftfederbeins 2 ausgebildet, so wie es auch in der Figur 1 gezeigt ist. Die Breite B des Absatzes ergibt sich aus der Differenz des Außenwanddurchmessers 32 des Federträgers 14 oberhalb des Absatzes 22 von dem Außenwanddurchmesser 38 des Federträgers 14 unterhalb des Absatzes 22 (s. auch Figur 2).

Im Zusammenhang mit der Figur 2, die den in der Figur 1 umrandeten Ausschnitt vergrößert darstellt, wird nunmehr erläutert, wie der Abrollkolben 12 auf dem Federträger 14 aufgesetzt ist. Der Federträger 14 weist einen Absatz 22 auf, auf dem ein elastisch verformbarer O-Ring 24, gefertigt bevorzugt aus Standardelastomeren, wie z.B. NBR oder EPDM, angeordnet ist, dessen Querschnittsflächendurchmesser 26 im unbelasteten Zustand so bemessen ist, daß er die Breite B des Absatzes 22 zumindest bedeckt (siehe auch Figur 2b, die einen unbelasteten O-Ring 24 zeigt). Vorzugsweise beträgt der Querschnittsflächendurchmesser 26 im unbelasteten Zustand des O-Rings 24 2 mm bis 8 mm und die Breite B des Absatzes 22 60 % bis 80 % des entsprechenden Wertes.

Der Federträger 14 taucht in den Abrollkolben 12 ein, wobei der Abrollkolben 12 sich auf dem Absatz 22 des Federträgers 14 axial abstützt. Dazu weist der Abrollkolben 12 in einem Bereich 28 oberhalb des Absatzes 22 einen Innenwanddurchmesser 30 auf, der weitgehend genauso groß ist, wie der Außenwanddurchmesser 32 des Federträgers 14 oberhalb des Absatzes 22. Oberhalb des Bereiches 28 (also in Richtung Luftfederbalg 6; siehe Figur 1) weitet sich der Abrollkolben 12 auf einen Durchmesser auf, der deutlich größer ist als der Durchmesser des Federträgers 14, so daß ein zusätzliches Luftvolumen zwischen dem Abrollkolben 12 und dem Federträger 14 geschaffen wird.

Ausgehend von dem Bereich 28 ist der dem Federträger 14 zugewandte Endbereich 34 des Abrollkolbens 12 nach radial außen ausgestellt, so daß der Innenwanddurchmesser 36 des Endbereiches 34 zumindest dem maximalen Außenwanddurchmesser 38 des Absatzes 22 entspricht. Vorzugsweise wird der Innenwanddurchmesser 36 des Endbereiches 34 so bemessen, daß er weitgehend dem Außenwanddurchmesser 38 des Absatzes 22 entspricht.

Der O-Ring 24 ist zwischen der Außenwand 40 des Federträgers 14 und der Innenwand 42 des Endbereiches 34 des Abrollkolbens 12 radial verpreßt und dichtet daher den Federraum 4 gegenüber der Umgebung luftdicht ab.

Der Federträger 14 weist oberhalb des Absatzes 22 (in Richtung des Rollbalges 6) einen Anschlag 44 in Form eines Absatzes 44 auf, auf dem der O-Ring 24 vor der Montage des Abrollkolbens 12 auf dem Federträger 14 aufgelegt wird. Der maximale Außenwanddurchmesser des Anschlages 44 entspricht bei dem in der Figur 2 gezeigten Ausführungsbeispiel dem minimalen Außenwanddurchmesser des Absatzes 22 und der Federträger 14 geht dementsprechend zylinderförmig von dem Anschlag 44 zu dem Absatz 22 über.

Wird der O-Ring 24 vor der Montage des Abrollkolbens 12 auf dem Federträger 14 auf den Anschlag 44 aufgelegt und wird danach der Federträger 14 in den Abrollkolben 12 eingeführt, so rollt der O-Ring dabei an der Außenwand 40 des Federträgers 14 und an der Innenwand 42 des Abrollkolbens 12 ab, bis er die in der Figur 2 gezeigte Endposition einnimmt.

Vorzugsweise ist der Abstand 46 zwischen dem Anschlag 44 und dem Absatz 22 geringfügig kleiner als ein ganzzahliges Vielfaches des Umfanges der Querschnittsfläche des O-Ringes 24. Der Vorteil einer derartigen Abstandbemessung ist darin zu sehen, daß der O-Ring 24 bei einem Abrollen während der Montage des Abrollkolbens auf dem Federträger 14 von dem Anschlag 44 auf den Absatz 22 eine letzte Umdrehung nicht mehr zu Ende ausführen kann. Da der O-Ring jedoch das "Bestreben" hat, auch die letzte Umdrehung noch vollständig auszuführen, wird die radiale Pressung des O-Ringes 24 auf dem Absatz 22 unterstützt.

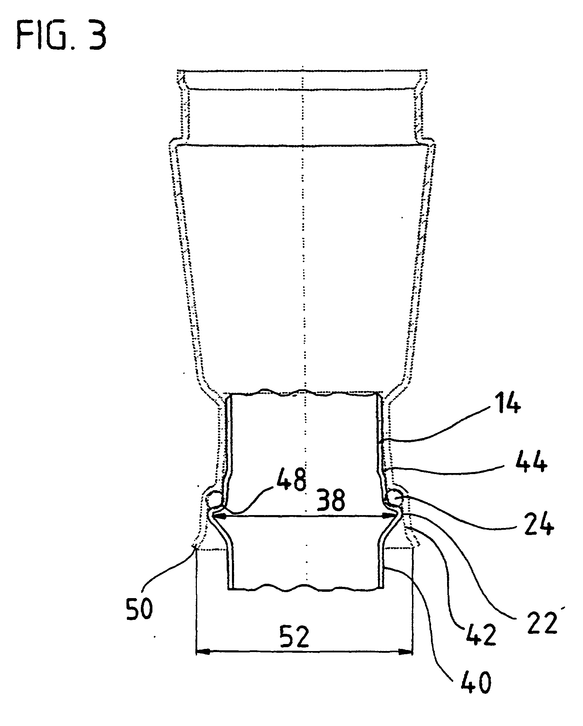

Figur 3 zeigt ebenfalls einen vergrößerten Ausschnitt aus einem Luftfederbein 2. Die Figur 3 zeigt weitgehend das gleiche wie die Figur 2, ein Unterschied ist lediglich darin zu sehen, daß bei der Figur 3 der Federträger 14 als weitgehend zylindrisches Rohr ausgebildet ist, in dem der Absatz 22 als Sicke 22 ausgebildet. Eine derartige Sicke 22 kann in einem zylinderförmigen Rohr auf besonders einfache Art und Weise dadurch hergestellt werden, daß das Rohr von innen nach radial außen ausgestellt wird. Auf die gleiche Art und Weise kann bei dem in der Figur 3 gezeigten Federträger 14 der Anschlag 44 ausgebildet werden.

Vorzugsweise weist der Federträger 14 unmittelbar oberhalb der Sicke 22 (in Richtung des Abrollbalges 6 gesehen) eine Taille 48 auf, in der der O-Ring 24 liegt. Durch die Taillierung des Federträgers 14 unmittelbar oberhalb der Sicke 22 wird die radiale Verpressung des O-Ringes 24 zwischen der Innenwand 42 des Abrollkolbens und der Außenwand 40 des Federträgers 14 unterstützt.

Sowohl bei dem Ausführungsbeispiel gemäß der Figur 2 als auch bei dem Ausführungsbeispiel gemäß der Figur 3 kann das dem Federräger 14 zugewandte Ende 50 des Abrollkolbens 12 einen Innendurchmesser 52 aufweisen, der deutlich größer ist als der maximale Außendurchmesser 38 des Absatzes 22, so daß der Endbereich 34 des Federträgers 14 tulpenartig" ausgebildet ist. Eine derartige Ausbildung des Endes des Abrollkolbens 12 erleichtert das Aufsetzen des Abrollkolbens 12 auf dem Federträger 14.

### Bezugszeichenliste

- 2: Luftfederbein
- 4: Federraum
- 6: Rollbalg
- 8a, b: Befestigungselemente
- 10: Deckel
- 12: Abrollkolben
- 14: Federträger
- 16: Kolbenstange
- 18: Puffer
- 20: Endkappe
- 22: Absatz
- 24: O-Ring
- 26: Querschnittsflächendurchmesser
- 28: Bereich des Abrollkolbens
- 30: Innenwanddurchmesser des Abrollkolbens
- 32: Außenwanddürchmesser des Federträgers
- 34: Endbereich
- 36: Innenwanddurchmesser des Endbereiches
- 38: Außenwanddurchmesser des Absatzes
- 40: Außenwand des Federträgers
- 42: Innenwand des Abrollkolbens
- 44: Anschlag
- 46: Abstand
- 48: Taille
- 50: Ende
- 52: Innenwanddurchmesser des Endes
- 54: Längsachse des Luftfederbeins

## Patentansprüche

1. Luftfederbein (2), das folgende Bestandteile enthält:
- eine Luftfeder mit einem Rollbalg (6), die einen Federraum (4) umschließt,
- einen Abrollkolben (12), über den der Rollbalg (6) abrollbar ist,
- einen Federträger (14), der in den Abrollkolben (12) eingetaucht ist, mit einem Absatz (22), auf den der Abrollkolben (12) aufgesetzt ist,
- eine ringförmige Dichtung (24), die zwischen dem Federträger (14) und dem Abrollkolben (12) angeordnet ist und den Federraum (4) gegenüber der Umgebung abdichtet,
**dadurch gekennzeichnet, daß**
- auf dem Absatz (22) des Federträgers (14) ein O-Ring (24) angeordnet ist, dessen Querschnittsflächendurchmesser (26) so bemessen ist, daß er die Breite des Absatzes (22) zumindest bedeckt und daß
- der dem Federträger (14) zugewandte Endbereich (34) des Abrollkolbens (12) nach radial außen ausgestellt ist und daß
- der Federträger (14) derart in den Abrollkolben (12) eintaucht, daß der nach radial außen ausgestellte Endbereich (34) des Abrollkolbens (12) den Absatz (22) des Federträgers (14) umfaßt und der O-Ring (24) zwischen der Außenwand (40) des Federträger (14) und der Innenwand (42) des Endbereiches (34) des Abrollkolbens (12) radial verpreßt ist.

2. Luftfederbein (2) nach Anspruch 1, **dadurch gekennzeichnet, daß** der Abrollkolben (12) und der Federträger (14) weitgehend rotationssymmetrisch zu ihrer Längsachse ausgebildet sind und daß der Innenwanddurchmesser (36) des Endbereiches (34) des Abrollkolbens (12) weitgehend dem maximalen Außenwanddurchmesser (38) des Absatzes (22) des Federträgers (14) entspricht.

3. Luftfederbein (2) nach einem der Ansprüche 1 bis 2, **dadurch gekennzeichnet, daß** der Federträger (14) oberhalb des Absatzes (22) einen Anschlag (44) aufweist, auf den der O-Ring (24) vor der Montage des Abrollkolbens (12) auf dem Federträger (14) aufgelegt wird.

4. Luftfederbein (2) nach Anspruch 3, **dadurch gekennzeichnet, daß** der Abstand (46) zwischen dem Anschlag (44) und dem Absatz (22) geringfügig kleiner als ein ganzzahliges Vielfaches des Umfanges der Querschnittsfläche des O-Ringes (24) ist.

5. Luftfederbein (2) nach einem der Ansprüche 1 bis 4, **dadurch gekennzeichnet, daß** der Federträger (14) unmittelbar oberhalb des Absatzes (22) eine Taille (48) aufweist, in der der O-Ring (24) liegt.

6. Luftfederbein (2) nach einem der Ansprüche 1 bis 5, **dadurch gekennzeichnet, daß** der Absatz (22) im Federträger (14) als Sicke ausgebildet ist.

7. Luftfederbein (2) nach einem der Ansprüche 1 bis 6, **dadurch gekennzeichnet, daß** das dem Federträger (14) zugewandte Ende (50) des Abrollkolbens (12) einen Innenwanddurchmesser (52) aufweist, der deutlich größer ist als der Außenwanddurchmesser (38) des Absatzes (22) und der Innenwanddurchmesser des Endes (50) sich im Endbereich (34) des Abrollkolbens (12) auf den Außenwanddurchmesser (38) des Absatzes (22) verjüngt.

8. Verfahren zur Herstellung eines Luftfederbeins (2) nach einem der Ansprüche 1 bis 7, **gekennzeichnet durch** folgende Verfahrensschritte:
- auf den Federträger (14) wird ein O-Ring (24) aufgelegt
- der Federträger (14) wird derart in den Abrollkolben (12) eingeführt, daß der nach radial außen ausgestellte Endbereich (34) des Abrollkolbens (12) den Absatz (22) des Federträgers (14) umfaßt und der O-Ring (24) auf den Absatz (22) des Federträgers (14) zu liegen kommt und zwischen der Außenwand (40) des Federträgers (14) und der Innenwand (42) des Endbereiches (34) des Abrollkolbens (12) radial verpreßt wird.

9. Verfahren zur Herstellung eines Luftfederbeins nach Anspruch 8, **dadurch gekennzeichnet, daß** der O-Ring (24) auf einen Anschlag (44) oberhalb des Absatzes (22) aufgelegt wird und der O-Ring (24) beim Einführen des Federträgers (14) in den Abrollkolben (12) von dem Anschlag (44) zu dem Absatz (22) abrollt.

## Claims

1. Pneumatic strut (2), which contains the following components:
- a pneumatic spring having a rolling bellows (6) which surrounds a spring compartment (4),
- a roll-off piston (12), along which the rolling bellows (6) can roll,
- a spring support (14), which is plunged into the roll-off piston (12) and has a shoulder (22) on which the roll-off piston (12) is placed,
- an annular seal (24), which is arranged between the spring support (14) and the roll-off piston (12) and which seals the spring compartment (4) from the environment,
**characterised in that**
- there is arranged on the shoulder (22) of the spring support (14) an O-ring (24), the cross-sectional surface diameter (26) of which is of such dimensions that it at least covers the width of the shoulder (22), and **in that**
- the end region (34) of the roll-off piston (12) facing the spring support (14) is flared radially outwards, and **in that**
- the spring support (14) is plunged into the roll-off piston (12) in such a way that the radially outwardly flared end region (34) of the roll-off piston (12) surrounds the shoulder (22) of the spring support (14) and the O-ring (24) is compressed radially between the outer wall (40) of the spring support (14) and the inner wall (42) of the end region (34) of the roll-off piston (12).

2. Pneumatic strut (2) according to claim 1, **characterised in that** the roll-off piston (12) and the spring support (14) are configured substantially rotationally symmetrical with respect to their longitudinal axis, and **in that** the inner wall diameter (36) of the end region (34) of the roll-off piston (12) substantially corresponds to the maximum outer wall diameter (38) of the shoulder (22) of the spring support (14).

3. Pneumatic strut (2) according to one of claims 1 to 2, **characterised in that** the spring support (14) has above the shoulder (22) a stop (44) on which the O-ring (24) is placed before the mounting of the roll-off piston (12) on the spring support (14).

4. Pneumatic strut (2) according to claim 3, **characterised in that** the spacing (46) between the stop (44) and the shoulder (22) is slightly smaller than a whole-number multiple of the circumference of the cross-sectional area of the O-ring (24).

5. Pneumatic strut (2) according to one of claims 1 to 4, **characterised in that** the spring support (14) has immediately above the shoulder (22) a reduced shank (48) in which the O-ring (24) lies.

6. Pneumatic strut (2) according to one of claims 1 to 5, **characterised in that** the shoulder (22) in the spring support (14) is configured as a bead.

7. Pneumatic strut (2) according to one of claims 1 to 6, **characterised in that** the end (50) of the roll-off piston (12) facing the spring support (14) has an inner wall diameter (52) which is significantly greater than the outer wall diameter (38) of the shoulder (22) and the inner wall diameter of the end (50) tapers in the end region (34) of the roll-off piston (12) to the outer wall diameter (38) of the shoulder (22).

8. Method for producing a pneumatic strut (2) according to one of claims 1 to 7, **characterised by** the following method steps:
- an O-ring (24) is placed on the spring support (14),
- the spring support (14) is introduced into the roll-off piston (12) in such a way that the radially outwardly flared end region (34) of the roll-off piston (12) surrounds the shoulder (22) of the spring support (14) and the O-ring (24) comes to rest on the shoulder (22) of the spring support (14) and is compressed radially between the outer wall (40) of the spring support (14) and the inner wall (42) of the end region (34) of the roll-off piston (12).

9. Method for producing a pneumatic strut according to claim 8, **characterised in that** the O-ring (24) is placed on a stop (44) above the shoulder (22) and as the spring support (14) is introduced into the roll-off piston (12), the O-ring (24) rolls from the stop (44) to the shoulder (22).

## Revendications

1. Jambe à ressort pneumatique (2) qui comprend les pièces de structure suivantes:
- un ressort pneumatique comportant un soufflet roulant (6) qui entoure un espace élastique (4),
- un piston à soufflet roulant (12) sur lequel peut être déroulé le soufflet roulant (6),
- un support élastique (14), qui est introduit dans le piston à soufflet roulant (12), comportant un épaulement (22) sur lequel est monté le piston à soufflet roulant (12),
- un joint (24) de forme annulaire qui est disposé entre le support élastique (14) et le piston à soufflet roulant (12) et assure l'étanchéité de l'espace élastique (4) par rapport à l'environnement extérieur,
**caractérisée**
- **en ce qu'**un joint torique (24) est disposé sur l'épaulement (22) du support élastique (14), joint torique dont le diamètre (26) de la surface de section est dimensionné de façon telle, qu'il couvre au moins la largeur de l'épaulement (22),
- **en ce que** la zone d'extrémité (34) du piston à soufflet roulant (12), tournée vers le support élastique (14), est orientée vers l'extérieur dans le sens radial, et
- **en ce que** le support élastique (14) pénètre dans le piston à soufflet roulant (12) de manière telle, que la zone d'extrémité (34) du piston à soufflet roulant (12), orientée vers l'extérieur dans le sens radial, entoure l'épaulement (22) du support élastique (14), et le joint torique (24) est comprimé radialement entre la paroi extérieure (40) du support élastique (14) et la paroi intérieure (42) de la zone d'extrémité (34) du piston à soufflet roulant (12).

2. Jambe à ressort pneumatique (2) selon la revendication 1, **caractérisée en ce que** le piston à soufflet roulant (12) et le support élastique (14) sont conçus en étant largement symétriques en rotation par rapport à leur axe longitudinal et **en ce que** le diamètre de paroi intérieure (36) de la zone d'extrémité (34) du piston à soufflet roulant (12) correspond dans une large mesure au diamètre maximum de paroi extérieure (38) de l'épaulement (22) du support élastique (14).

3. Jambe à ressort pneumatique (2) selon la revendication 1 ou 2, **caractérisée en ce que** le support élastique (14) présente, au-dessus de l'épaulement (22), une butée (44) sur laquelle est placé le joint torique (24), avant le montage du piston à soufflet roulant (12) sur le support élastique (14).

4. Jambe à ressort pneumatique (2) selon la revendication 3, **caractérisée en ce que** l'espacement (46) entre la butée (44) et l'épaulement (22) est un peu plus petit qu'un multiple entier de la circonférence de la surface de section du joint torique (24).

5. Jambe à ressort pneumatique (2) selon l'une quelconque des revendications 1 à 4, **caractérisée en ce que** le support élastique (14) présente, directement au-dessus de l'épaulement (22), un logement (48) dans lequel se trouve le joint torique (24).

6. Jambe à ressort pneumatique (2) selon l'une quelconque des revendications 1 à 5, **caractérisée en ce que** l'épaulement (22) est configuré, dans le support élastique (14), comme un jonc.

7. Jambe à ressort pneumatique (2) selon l'une quelconque des revendications 1 à 6, **caractérisée en ce que** l'extrémité (50) du piston à soufflet roulant (12), tournée vers le support élastique (14), présente un diamètre de paroi intérieure (52) qui est nettement plus grand que le diamètre de paroi extérieure (38) de l'épaulement (22), et le diamètre de paroi intérieure de l'extrémité (50), dans la zone d'extrémité (34) du piston à soufflet roulant (12), est réduit à la dimension du diamètre de paroi extérieure (38) de l'épaulement (22).

8. Procédé de fabrication d'une jambe à ressort pneumatique (2) selon l'une quelconque des revendications 1 à 7, **caractérisé par** des étapes de procédé suivantes:
- un joint torique (24) est placé sur le support élastique (14),
- le support élastique (14) est introduit dans le piston à soufflet roulant (12) de manière telle, que la zone d'extrémité (34) du piston à soufflet roulant (12), orientée vers l'extérieur dans le sens radial, entoure l'épaulement (22) du support élastique (14), et le joint torique (24) vient s'appliquer sur l'épaulement (22) du support élastique (14) et est comprimé radialement entre la paroi extérieure (40) du support élastique (14) et la paroi intérieure (42) de la zone d'extrémité (34) du. piston à soufflet roulant (12).

9. Procédé de fabrication d'une jambe à ressort pneumatique selon la revendication 8, **caractérisé en ce que** le joint torique (24) est placé sur une butée (44) située au-dessus de l'épaulement (22) et le joint torique (24), lors de l'introduction du support élastique (14) dans le piston à soufflet roulant (12), roule depuis la butée (44) jusqu'à l'épaulement (22).
